# EUROPEAN PATENT APPLICATION

(11) **EP 4 693 200 A1**
(43) Date of publication of application: **11.02.2026**
(21) Application number: 24830453.7
(22) Date of filing: 06.06.2024
(51) Int. Cl.: G06T 11/60

(54) **IMAGE PROCESSING METHOD AND APPARATUS, AND DEVICE AND MEDIUM**

(30) Priority: 27.06.2023 CN 202310768363
(71) Applicant: Beijing Zitiao Network Technology Co., Ltd., Beijing 100190 (CN)
(72) Inventor: ZHAO, Jiacai, Beijing 100028 (CN)
(74) Representative: Marks & Clerk LLP
(86) International application number: PCT/CN2024/097852
(87) International publication number: WO 2025/001807

(57) **Abstract**

Embodiments of the present disclosure relate to an image processing method and apparatus, a device, and a medium. The method includes: obtaining a target image to be processed; obtaining content information of the target image; determining a position of a mirror line in the target image based on the content information, where the mirror line partitions the target image into a first region and a second region; determining, based on the second region and the position of the mirror line in the target image, mirror content corresponding to image content of the first region; and overlaying image content of the second region with the mirror content to obtain a processed target image.

## Description

### CROSS-REFERENCE TO RELATED APPLICATION(S)

The present application claims priority to Chinese Patent Application No. 202310768363.9, filed on June 27, 2023 and entitled "IMAGE PROCESSING METHOD AND APPARATUS, DEVICE, AND MEDIUM", which is incorporated herein by reference in its entirety.

### FIELD

The present disclosure relates to the field of image processing technologies, and in particular, to an image processing method and apparatus, a device, and a medium.

### BACKGROUND

Nowadays, an increasing number of users opt to process original images using editing software or image design tools. The inventors have found through research that existing image processing methods are relatively common, which just involve, for example, simple operations such as image beautification and applying filters, leading to weak image appeal and poor visual impact.

### SUMMARY

To solve the foregoing technical problems or at least partially solve the foregoing technical problems, the present disclosure provides an image processing method and apparatus, a device, and a medium.

An embodiment of the present disclosure provides an image processing method. The method includes: obtaining a target image to be processed; obtaining content information of the target image; determining a position of a mirror line in the target image based on the content information, where the mirror line partitions the target image into a first region and a second region; determining, based on the second region and the position of the mirror line in the target image, mirror content corresponding to image content of the first region; and overlaying image content of the second region with the mirror content to obtain a processed target image.

Optionally, the step of determining the position of the mirror line in the target image based on the content information includes: determining, based on the content information, a target scene category to which the target image belongs from a plurality of preset scene categories; and determining the position of the mirror line in the target image based on the target scene category.

Optionally, the step of determining the position of the mirror line in the target image based on the target scene category includes: determining a target angle based on the target scene category, where the target angle is an included angle between the mirror line and a preset reference line; and determining the position of the mirror line in the target image based on the target angle and the content information.

Optionally, the step of determining the target angle based on the target scene category includes: determining a target angle corresponding to the target scene category based on a preset correspondence between scene categories and mirror line angles.

Optionally, the step of determining the position of the mirror line in the target image based on the target angle and the content information includes: obtaining a preset image partitioning condition; and determining the position of the mirror line in the target image based on the target angle, the content information, and the image partitioning condition, where the first region and the second region partitioned by the mirror line meet the image partitioning condition.

Optionally, the image partitioning condition includes one or more of the following conditions: an area of the first region being not less than an area of the second region; a main object in the target image being located in the first region, and the main object being determined based on the content information of the target image; and a proportion of the second region relative to the target image being within a preset proportion range.

Optionally, the main object is determined by: generating a heat map of the target image based on the content information of the target image, and determining the main object based on the heat map.

Optionally, the step of determining the position of the mirror line in the target image based on the target angle, the content information, and the image partitioning condition includes: determining a target initial position corresponding to the target angle based on a preset correspondence between mirror line angles and mirror line initial positions; and adjusting, in a case where the first region and the second region partitioned by the mirror line located at the target initial position do not meet the image partitioning condition, the position of the mirror line starting from the target initial position until a first region and a second region partitioned by the adjusted mirror line meet the image partitioning condition.

Optionally, the step of adjusting the position of the mirror line starting from the target initial position includes: moving the position of the mirror line in a parallel manner at a preset step size starting from the target initial position.

Optionally, the step of obtaining the target image to be processed includes: obtaining an original image, and obtaining a global principal direction of the original image; and correcting, in a case where the global principal direction of the original image is inconsistent with a preset direction, the original image to obtain the target image to be processed.

An embodiment of the present disclosure further provides an image processing apparatus. The apparatus includes: an image obtaining module configured to obtain a target image to be processed; a content obtaining module configured to obtain content information of the target image; a mirror line determination module configured to determine a position of a mirror line in the target image based on the content information, where the mirror line partitions the target image into a first region and a second region; a mirror content determination module configured to determine, based on the second region and the position of the mirror line in the target image, mirror content corresponding to image content of the first region; and a content overlay module configured to overlay image content of the second region with the mirror content to obtain a processed target image.

An embodiment of the present disclosure further provides an electronic device. The electronic device includes: a processor; and a memory used to store processor executable instructions, where the processor is used to read the executable instructions from the memory, and execute the instructions to implement the image processing method provided in the embodiments of the present disclosure.

An embodiment of the present disclosure further provides a computer-readable storage medium having a computer program stored therein, where the computer program is used to perform the image processing method provided in the embodiments of the present disclosure.

An embodiment of the present disclosure further provides a computer program product comprising a computer program that, when executed by a processor, implements the image processing method provided in the embodiments of the present disclosure.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a schematic flowchart of an image processing method according to an embodiment of the present disclosure;
FIG. 2 is a schematic diagram of a principal direction of an image according to an embodiment of the present disclosure;
FIG. 3 is a schematic diagram of a plurality of mirror line angles according to an embodiment of the present disclosure;
FIG. 4 is a schematic diagram of a comparison between an original image and a heat map according to an embodiment of the present disclosure;
FIG. 5 is a schematic diagram of an adjustment to a position of a mirror line according to an embodiment of the present disclosure;
FIG. 6 is a schematic diagram of a processed target image according to an embodiment of the present disclosure;
FIG. 7 is a schematic diagram of a processed target image according to an embodiment of the present disclosure;
FIG. 8 is a schematic structural diagram of an image processing apparatus according to an embodiment of the present disclosure; and
FIG. 9 is a schematic structural diagram of an electronic device according to an embodiment of the present disclosure.

### DETAILED DESCRIPTION OF EMBODIMENTS

For a clearer understanding of the above-mentioned objectives, features and advantages of the present disclosure, the solutions of the present disclosure will be further described below. It is to be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

Existing image processing methods lack strong image appeal and visual impact. The inventors observed that although the image mirroring effect typically exhibits certain appeal and can deliver strong visual impact to users, real-world scenarios that can achieve the image mirroring effect are limited. For example, most users are required to photograph reflections in a scene with water surface to achieve the image mirroring effect. This is time-consuming and laborious, and can only achieve limited mirroring effects, mostly horizontal mirroring, making it difficult to meet user requirements. In order to mitigate at least one of the foregoing problems, the embodiments of the present disclosure provide an image processing method and apparatus, a device, and a medium, which can achieve a mirroring effect directly through image processing without being limited to the water surface scene. In addition, the embodiments of the present disclosure enable targeted mirror processing directly based on image content, such that the resulting mirrored content aligns more closely with real-world scenes and presents stronger image appeal, thereby providing users with personalized impressions, and significantly enhancing visual impact effectiveness. For ease of understanding, detailed description is provided below.

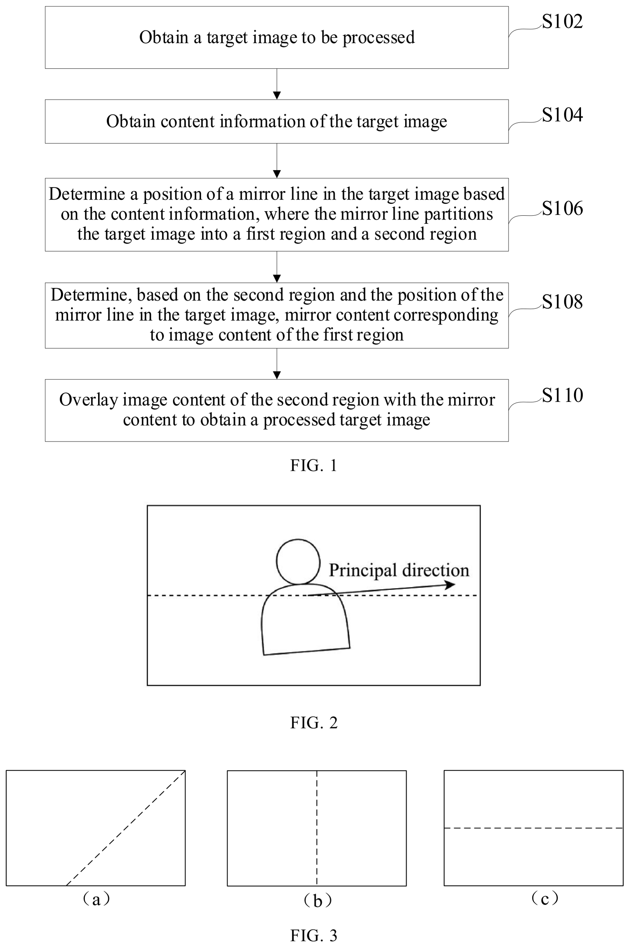

FIG. 1 is a schematic flowchart of an image processing method according to an embodiment of the present disclosure. The method may be performed by an image processing apparatus, which may be implemented using software and/or hardware and may generally be integrated into an electronic device. As shown in FIG. 1, the method mainly includes the following steps S102 to S110.

Step S102: a target image to be processed is obtained.

In this embodiment of the present disclosure, image content of the target image and the method for obtaining the target image are not limited. For example, the target image may be an image that is captured by a user at a scene, or may be an image that is selected by the user locally or from a cloud. In addition, the target image may be an original image, or may be an image obtained by pre-processing the original image. The pre-processing may involve correction, beautification, etc., which is not limited herein.

Step S104: content information of the target image is obtained.

In some implementation examples, various objects included in the target image may be detected by using, for example, one or more object detection algorithms. The objects include, but are not limited to, persons, animals, street signs, vehicles, buildings, trees, water surfaces, and other specified objects of any type, which are not limited herein. The content information of the target image may include object type information, position information, etc. included in the target image, and may further include scene information obtained based on object recognition, etc., which is not limited herein.

Step S106: a position of a mirror line in the target image is determined based on the content information. The mirror line partitions the target image into a first region and a second region. In other words, the mirror line is a boundary between the first region and the second region.

For example, a scene type to which the target image belongs may be identified based on the content information, with different scene types corresponding to different mirror line directions, a main object in the target image is identified based on the content information, and the specific position of the mirror line is then determined based on the type and/or position of the main object. In the foregoing method, the mirror line may be determined directly based on the content information. Compared with the method in the related art in which a mirror line is fixedly set or needs to be specified by a user, the foregoing method according to this embodiment of the present disclosure is more convenient and quicker, and can also effectively guarantee the image mirroring effect.

Step S108: mirror content corresponding to image content of the first region is determined based on the second region and the position of the mirror line in the target image.

In actual applications, the first region may be mirrored along the mirror line based on the position of the mirror line in the target image, to obtain mirror content matching the shape and size of the second region. It is to be noted that when the area of the second region is less than the area of the first region, it is possible to mirror the image content of the first region based only on the shape and size of the second region and the position of the mirror line, without the need to mirror all the image content of the first region.

Step S110: image content of the second region is overlaid with the mirror content to obtain a processed target image.

In some specific implementation examples, the area of the first region is not less than the area of the second region, such that the image content of the second region can be entirely overlaid with the mirror content corresponding to the image content the first region. The image content of the first region and the mirror content for the second region together form the processed target image.

Through the above-mentioned image processing method according to this embodiment of the present disclosure, mirror impressions can be conveniently and quickly presented to the user; in addition, since the position of the mirror line is not fixedly set but rather personalized and determined based on image content information, the resulting mirrored content aligns more closely with real-world scenes and presents stronger image appeal, thereby significantly enhancing visual impact effectiveness.

In order to further enhance image impressions, this embodiment of the present disclosure provides step S102, that is, an implementation of the step of obtaining the target image to be processed, which includes: obtaining an original image, and obtaining a global principal direction of the original image; and correcting, in a case where the global principal direction of the original image is inconsistent with a preset direction, the original image to obtain the target image to be processed.

The global principal direction may be understood as a capture direction of the original image. For ease of understanding, as shown in FIG. 2, a schematic diagram of a principal direction of an image shows that the capture direction of the original image is not a horizontally upright direction. Consequently, the resulting original image will appear skewed to a certain extent. In this case, the image direction usually needs to be manually adjusted in the related art, while in this embodiment of the present disclosure, the principal direction of the image may be automatically detected, and the image may be corrected. In actual applications, the global principal direction of the original image may be obtained by using a direction detection algorithm or a deep learning model that is pre-trained based on training samples marked with the principal direction of the image, or if the original image is captured by a device that is currently performing the image processing method, the parameters, such as gyroscope information and camera parameters, used by the device when capturing the original image may be directly obtained to analyze the global principal direction of the image. The foregoing description is an exemplary illustration, and any method for obtaining the global principal direction is possible. This is not limited herein.

In a case where the global principal direction of the original image is inconsistent with the preset direction, a correction operation such as rotation may be performed on the original image to make the global principal direction of the obtained target image consistent with the preset direction. For example, this enables the target image to present a horizontally upright viewing experience to the user, thereby effectively improving the viewing experience of the user, and making it easier to subsequently determine the mirror line direction and then determine the specific position of the mirror line.

In order for reasonable and reliable determination of the mirror line in the target image, in some implementations, the foregoing step S106, that is, the step of determining a position of a mirror line in the target image based on the content information, may be performed by the following steps 1 and 2.

Step 1: based on the content information, a target scene category to which the target image belongs is determined from a plurality of preset scene categories. For example, the plurality of scene categories include water or road surface scenes, urban building scenes, street scenes, pedestrian scenes, static-object scenes, etc., where the static-object scenes may be further divided into elongated static objects or short-flat static objects, etc., depending on the size of the still objects. The plurality of scene categories may be flexibly set according to actual requirements, which are not limited herein.

Step 2: the position of the mirror line in the target image is determined based on the target scene category.

It may be understood that different scene categories present different image sensations, and also correspond to different mirror line positions.

For example, the foregoing step 2 may be performed by the following steps A and B.

Step A: a target angle is determined based on the target scene category. The target angle is an included angle between the mirror line and a preset reference line.

In some specific implementation examples, depending on features of various scene categories, an optimal angle of the mirror line corresponding to each scene category may be preset, and the target angle corresponding to the target scene category may then be determined based on a preset correspondence between scene categories and mirror line angles. For example, taking a preset reference line being a horizontal line as an example, the angle of the mirror line corresponding to the water or road surface scene may be 45 degrees, presenting to the user a dramatic impression of a folded water or road surface; the angle of the mirror line corresponding to the pedestrian scene may be 90 degrees, that is, presenting an impression of vertical mirror folding; and the angle of the mirror line corresponding to the urban building scene may be 0 degrees, presenting an impression of horizontal mirror folding. The foregoing description is an exemplary illustration. In actual applications, the angles of the mirror line corresponding to the scene categories may be flexibly set according to desired effects.

For ease of understanding, reference may be made to FIG. 3, which is a schematic diagram of a plurality of mirror line angles. Assuming that the reference line is a horizontal line, (a) in FIG. 3 indicates an included angle of 45 degrees between the mirror line and the preset reference line, (b) in FIG. 3 indicates an included angle of 90 degrees between the mirror line and the preset reference line, and (c) in FIG. 3 indicates an included angle of 0 degrees between the mirror line and the preset reference line. It is to be noted that FIG. 3 simply shows three mirror line angles. In actual applications, the mirror line angle may be flexibly set, for example, to 60 degrees, 30 degrees, etc., which is not limited herein. The angle of the mirror line in the target image (target angle) may be first determined based on the target scene category. It may be understood that there are many mirror line positions with the target angle, and the optimal position of the mirror line in the target image may be further determined subsequently.

Step B: the position of the mirror line in the target image is determined based on the target angle and the content information.

With the angle of the mirror line known, the optimal position of the mirror line may be determined through analysis based on the content information in the target image, such that a better mirror impression can be presented to the user. For example, the foregoing step B may be performed by the following steps B1 and B2.

Step B1: a preset image partitioning condition is obtained. In some implementations, the image partitioning condition includes one or more of the following conditions (1) to (3).

(1) The area of the first region is not less than the area of the second region. Since the first region is a region that requires mirroring and the second region is a region that needs to be overlaid with the mirror content of the first region, the area of the first region is not less than the area of the second region in order to ensure visual impressions.

(2) The main object in the target image is located in the first region, and the main object is determined based on the content information of the target image.

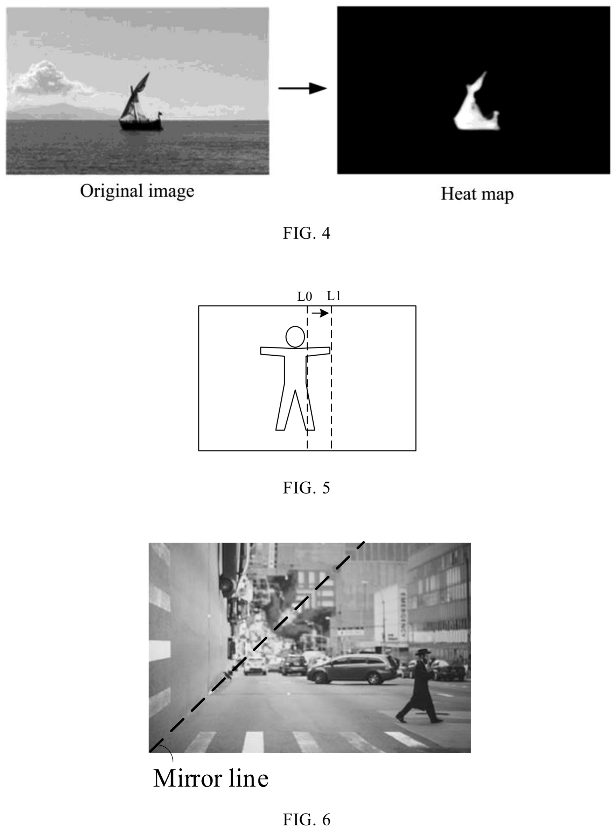

For example, the main object is determined by: generating a heat map of the target image based on the content information of the target image, and determining the main object based on the heat map. For ease of understanding, reference may be made to FIG. 4, which is a schematic diagram of a comparison between an original image and a heat map. The main object in the image can be clearly shown using the heat map. In actual applications, image saliency detection may be performed based on the content information of the target image, to generate the heat map of the target image. The foregoing description is merely an exemplary illustration. In actual applications, it is also possible to determine the objects included in the target image by using an object detection algorithm, and then determine the main object based on the types and/or positions of the objects.

By limiting the main object to be located in the first region, the main object can be mirrored to enhance the visual impact to the user.

(3) A proportion of the second region relative to the target image is within a preset proportion range.

By setting the proportion range of the second region, the second region can be prevented from being too large or too small. In other words, it can be avoided that the proportion of the mirror content of the first region in the target image is within an appropriate range, thereby ensuring the viewing experience of the user.

Step B2: the position (which may be understood as the optimal position) of the mirror line in the target image is determined based on the target angle, the content information, and the image partitioning condition. The first region and the second region partitioned by the mirror line meet the image partitioning condition.

In some specific implementation examples, the foregoing step B2 may be performed by the following steps B2.1 and B2.2.

Step B2.1: a target initial position corresponding to the target angle is determined based on a preset correspondence between mirror line angles and mirror line initial positions.

In actual applications, for each mirror line angle, a corresponding mirror line initial position may be set in advance. For example, taking the reference line being a horizontal line as an example, for a mirror line angle of 90 degrees, the mirror line initial position may be set at a vertical centerline of the target image; for a mirror line angle of 0 degrees, the mirror line initial position may be set at a horizontal centerline of the target image; and for a mirror line angle of 45 degrees, the end point of the mirror line may be set to a specified vertex of the target image.

Step B2.2: in a case where the first region and the second region partitioned by the mirror line located at the target initial position do not meet the image partitioning condition, the position of the mirror line is adjusted starting from the target initial position until a first region and a second region partitioned by the adjusted mirror line meet the image partitioning condition.

If the first region and the second region partitioned by the mirror line located at the target initial position meet the image partitioning condition, the target initial position is used as the optimal position of the mirror line. If they do not meet the image partitioning condition, tentative adjustments need to be made starting from the target initial position until the optimal position of the mirror line is found, such that the first region and the second region partitioned by the adjusted mirror line meet the image partitioning condition.

In a specific implementation example of adjusting the position of the mirror line starting from the target initial position, the position of the mirror line may be moved in a parallel manner at a preset step size starting from the target initial position until the image partitioning condition is met.

For ease of understanding, reference may be made to FIG. 5, which illustrates a schematic diagram of an adjustment to the position of a mirror line. The main object in the target image being a person is taken as an example. Assuming that the reference line is a horizontal line, the included angle between the mirror line and the preset reference line is 90 degrees. Assuming that the initial position of the mirror line is L0, but the first region and the second region partitioned at this time do not meet the image partitioning condition, that is, the main object is not entirely located in the first region. In this case, the mirror line may then be moved at the preset step size, which can be flexibly set according to requirements. A determination operation is performed every time the mirror line is moved until the first region and the second region partitioned by the position-adjusted mirror line meet the image partitioning condition, as shown by the mirror line position of L1 in FIG. 5. In this way, the optimal position of the mirror line can be determined quickly and effectively.

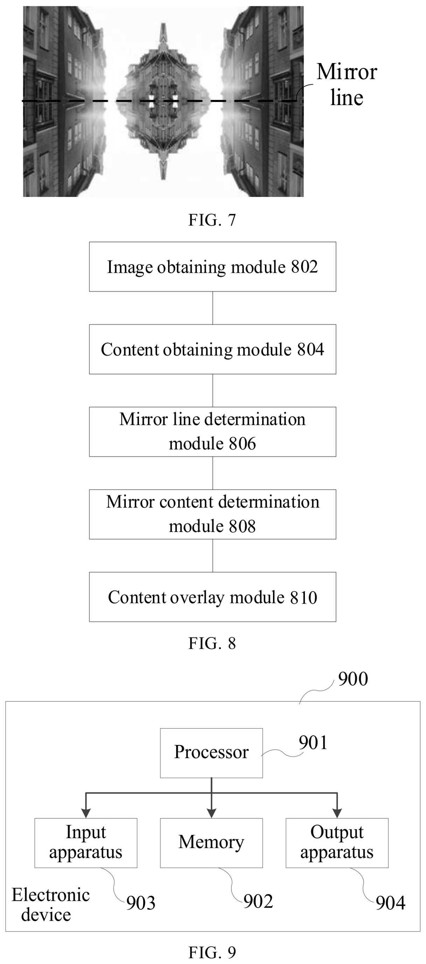

Through the above-mentioned image processing method according to this embodiment of the present disclosure, mirror impressions can be conveniently and quickly presented to the user; in addition, since the position of the mirror line is not fixedly set but rather personalized and determined based on image content information, the resulting mirrored content aligns more closely with real-world scenes and presents stronger image appeal, thereby significantly enhancing visual impact effectiveness. For ease of understanding, reference may be made to FIG. 6 and FIG. 7, which are schematic diagrams of a processed target image, respectively. In the street scene shown in FIG. 6 and the urban building scene shown in FIG. 7, for ease of understanding, the mirror line is marked in each of FIG. 6 and FIG. 7. However, in actual applications, the mirror line may be omitted. The mirror line in different scenes is at different positions, presenting different effects, but both bringing a stronger visual impact, and even presenting to users a surreal effect of a folded world, such as by twisting the ocean by 90 degrees, enabling the water to flow horizontally and vertically at the same time, and mirroring the urban buildings up and down to present a futuristic vision of City in the Air. The foregoing methods make the images more dramatic and magical, thereby providing the users with a shocking new perspective on the world.

Corresponding to the foregoing image processing method, FIG. 8 is a schematic structural diagram of an image processing apparatus according to an embodiment of the present disclosure. The apparatus may be implemented using software and/or hardware, and may be usually integrated in an electronic device. As shown in FIG. 8, the apparatus includes:
an image obtaining module 802 configured to obtain a target image to be processed;
a content obtaining module 804 configured to obtain content information of the target image;
a mirror line determination module 806 configured to determine a position of a mirror line in the target image based on the content information, where the mirror line partitions the target image into a first region and a second region;
a mirror content determination module 808 configured to determine, based on the second region and the position of the mirror line in the target image, mirror content corresponding to image content of the first region; and
a content overlay module 810 configured to overlay image content of the second region with the mirror content to obtain a processed target image.

Through the above-mentioned image processing apparatus according to this embodiment of the present disclosure, mirror impressions can be conveniently and quickly presented to the user; in addition, since the position of the mirror line is not fixedly set but rather personalized and determined based on image content information, the resulting mirrored content aligns more closely with real-world scenes and presents stronger image appeal, thereby significantly enhancing visual impact effectiveness.

In some implementations, the mirror line determination module 806 is further configured to: determine, based on the content information, a target scene category to which the target image belongs from a plurality of preset scene categories; and determine the position of the mirror line in the target image based on the target scene category.

In some implementations, the mirror line determination module 806 is further configured to: determine a target angle based on the target scene category, where the target angle is an included angle between the mirror line and a preset reference line; and determine the position of the mirror line in the target image based on the target angle and the content information.

In some implementations, the mirror line determination module 806 is further configured to: determine a target angle corresponding to the target scene category based on a preset correspondence between scene categories and mirror line angles.

In some implementations, the mirror line determination module 806 is further configured to: obtain a preset image partitioning condition; and determine the position of the mirror line in the target image based on the target angle, the content information, and the image partitioning condition, where the first region and the second region partitioned by the mirror line meet the image partitioning condition.

In some implementations, the image partitioning condition includes one or more of the following conditions: an area of the first region being not less than an area of the second region; a main object in the target image being located in the first region, and the main object being determined based on the content information of the target image; and a proportion of the second region relative to the target image being within a preset proportion range.

In some implementations, the main object is determined by: generating a heat map of the target image based on the content information of the target image, and determining the main object based on the heat map.

In some implementations, the mirror line determination module 806 is further configured to: determine a target initial position corresponding to the target angle based on a preset correspondence between mirror line angles and mirror line initial positions; and adjust, in a case where the first region and the second region partitioned by the mirror line located at the target initial position do not meet the image partitioning condition, the position of the mirror line starting from the target initial position until a first region and a second region partitioned by the adjusted mirror line meet the image partitioning condition.

In some implementations, the mirror line determination module 806 is further configured to: move the position of the mirror line in a parallel manner at a preset step size starting from the target initial position.

In some implementations, the image obtaining module 802 is further configured to: obtain an original image, and obtain a global principal direction of the original image; and correct, in a case where the global principal direction of the original image is inconsistent with a preset direction, the original image to obtain the target image to be processed.

The image processing apparatus according to this embodiment of the present disclosure can perform the image processing method according to any embodiment of the present disclosure, and has corresponding functional modules and beneficial effects for performing the method.

It can be clearly understood by those skilled in the art that, for convenience and brevity of description, for the specific operation processes of the apparatus embodiment described above, reference may be made to the corresponding processes in the foregoing method embodiments, and details are not described herein again.

FIG. 9 is a schematic structural diagram of an electronic device according to an embodiment of the present disclosure. As shown in FIG. 9, an electronic device 900 includes one or more processors 901 and a memory 902.

The processor 901 may be a central processing unit (CPU) or another form of processing unit having data processing capabilities and/or instruction execution capabilities, and may control other components in the electronic device 900 to perform desired functions.

The memory 902 may include one or more computer program products, where the computer program products may include various forms of computer-readable storage media, such as a volatile memory and/or a non-volatile memory. The volatile memory may include, for example, a random-access memory (RAM), and/or a cache memory (cache), etc. The non-volatile memory may include, for example, a read-only memory (ROM), a hard disk, a flash memory, etc. One or more computer program instructions may be stored on the computer-readable storage medium, and the processor 901 may execute the program instructions to implement the image processing method in the embodiments of the present disclosure described above and/or other desired functions. Various contents such as an input signal, a signal component, a noise component, etc. may also be stored in the computer-readable storage medium.

In an example, the electronic device 900 may further include: an input apparatus 903 and an output apparatus 904. These components are interconnected via a bus system and/or another form of connection mechanism (not shown).

In addition, the input apparatus 903 may further include, for example, a keyboard, a mouse, etc.

The output apparatus 904 may output various information to the outside, including determined distance information, direction information, etc. The output apparatus 904 may include, for example, a display, a speaker, a printer, a communication network and a remote output apparatus connected thereto, etc.

Certainly, for simplicity, only some of the components in the electronic device 900 that are related to the present disclosure are shown in FIG. 9, and components such as buses, input/output interfaces, etc. are omitted. In addition, the electronic device 900 may further include any other appropriate components according to the specific applications.

In addition to the method and device described above, an embodiment of the present disclosure may further be a computer program product including computer program instructions that, when executed by a processor, cause the processor to perform the image processing method provided in the embodiment of the present disclosure.

In the computer program product, program code for performing the operations of the embodiments of the present disclosure may be written in any combination of one or more programming languages, where the programming languages include an object oriented programming language, such as Java, and C++, and further include conventional procedural programming languages, such as "C" language or similar programming languages. The program code may be completely executed on a user computing device, partially executed on a user device, executed as an independent software package, executed partially on a user computing device and partially on a remote computing device, or completely executed on a remote computing device or a server.

In addition, an embodiment of the present disclosure may further be a computer-readable storage medium, having computer program instructions stored therein. The computer program instructions, when executed by a processor, cause the processor to perform the image processing method according to the embodiments of the present disclosure.

The computer-readable storage medium may be any combination of one or more readable media. The readable medium may be a readable signal medium or a readable storage medium. The readable storage medium may include, for example, but not limited to, an electronic, magnetic, optical, electromagnetic, infrared, or semiconductor system, apparatus, or device, or any combination thereof. More specific examples of the readable storage media (a non-exhaustive list) include: an electrical connection having one or more wires, a portable disk, a hard disk, a random-access memory (RAM), a read-only memory (ROM), an erasable programmable read-only memory (EPROM or flash), an optic fiber, a portable compact disk read-only memory (CD-ROM), an optical storage device, a magnetic storage device, or any suitable combination thereof.

An embodiment of the present disclosure further provides a computer program product, including a computer program/instruction that, when executed by a processor, implements the image processing method according to the embodiments of the present disclosure.

It is to be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The foregoing description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. An image processing method, comprising:
obtaining a target image to be processed;
obtaining content information of the target image;
determining a position of a mirror line in the target image based on the content information, wherein the mirror line partitions the target image into a first region and a second region;
determining, based on the second region and the position of the mirror line in the target image, mirror content corresponding to image content of the first region; and
overlaying image content of the second region with the mirror content to obtain a processed target image.

2. The method according to claim 1, wherein the step of determining the position of the mirror line in the target image based on the content information comprises:
determining, based on the content information, a target scene category to which the target image belongs from a plurality of preset scene categories; and
determining the position of the mirror line in the target image based on the target scene category.

3. The method according to claim 2, wherein the step of determining the position of the mirror line in the target image based on the target scene category comprises:
determining a target angle based on the target scene category, wherein the target angle is an included angle between the mirror line and a preset reference line; and
determining the position of the mirror line in the target image based on the target angle and the content information.

4. The method according to claim 3, wherein the step of determining the target angle based on the target scene category comprises:
determining a target angle corresponding to the target scene category based on a preset correspondence between scene categories and mirror line angles.

5. The method according to claim 3, wherein the step of determining the position of the mirror line in the target image based on the target angle and the content information comprises:
obtaining a preset image partitioning condition; and
determining the position of the mirror line in the target image based on the target angle, the content information, and the image partitioning condition, wherein the first region and the second region partitioned by the mirror line meet the image partitioning condition.

6. The method according to claim 5, wherein the image partitioning condition comprises one or more of the following conditions:
an area of the first region being not less than an area of the second region;
a main object in the target image being located in the first region, and the main object being determined based on the content information of the target image; and
a proportion of the second region relative to the target image being within a preset proportion range.

7. The method according to claim 6, wherein the main object is determined by:
generating a heat map of the target image based on the content information of the target image; and
determining the main object based on the heat map.

8. The method according to claim 5, wherein the step of determining the position of the mirror line in the target image based on the target angle, the content information, and the image partitioning condition comprises:
determining a target initial position corresponding to the target angle based on a preset correspondence between mirror line angles and mirror line initial positions; and
adjusting, in a case where the first region and the second region partitioned by the mirror line located at the target initial position do not meet the image partitioning condition, the position of the mirror line starting from the target initial position until a first region and a second region partitioned by the adjusted mirror line meet the image partitioning condition.

9. The method according to claim 8, wherein the step of adjusting the position of the mirror line starting from the target initial position comprises:
moving the position of the mirror line in a parallel manner at a preset step size starting from the target initial position.

10. The method according to claim 1, wherein the step of obtaining the target image to be processed comprises:
obtaining an original image, and obtaining a global principal direction of the original image; and
correcting, in a case where the global principal direction of the original image is inconsistent with a preset direction, the original image to obtain the target image to be processed.

11. An image processing apparatus, comprising:
an image obtaining module configured to obtain a target image to be processed;
a content obtaining module configured to obtain content information of the target image;
a mirror line determination module configured to determine a position of a mirror line in the target image based on the content information, wherein the mirror line partitions the target image into a first region and a second region;
a mirror content determination module configured to determine, based on the second region and the position of the mirror line in the target image, mirror content corresponding to image content of the first region; and
a content overlay module configured to overlay image content of the second region with the mirror content to obtain a processed target image.

12. An electronic device, comprising:
a processor; and
a memory used to store processor executable instructions,
wherein the processor is used to read the executable instructions from the memory, and execute the instructions to implement the image processing method according to any one of claims 1 to 10.

13. A computer-readable storage medium having a computer program stored therein, wherein the computer program is used to perform the image processing method according to any one of claims 1 to 10.

14. A computer program product, comprising a computer program that, when executed by a processor, implements the image processing method according to any one of claims 1 to 10.
